# EUROPEAN PATENT APPLICATION

(11) **EP 3 846 304 A1**
(43) Date of publication of application: **07.07.2021**
(21) Application number: 19383216.9
(22) Date of filing: 30.12.2019
(51) Int. Cl.: H02J 7/00, B60L 53/16, B60L 53/30, H02J 7/34

(54) **PORTABLE CHARGING DEVICE FOR ELECTRIC VEHICLES**

(71) Applicant: Diggia Solutions S.L., 28045 Madrid (ES)
(72) Inventor: ZORRILLA ASTUDILLO, Jose Manuel, 28045 Madrid (ES); CANTERO DELGADO, Alberto, 28045 Madrid (ES); POCOSTALES BUENAVIDA, David, 28045 Madrid (ES); SOLANO MARTIN, Daniel, 28045 Madrid (ES)
(74) Representative: Balder IP Law, S.L.

(57) **Abstract**

A portable charging device for electric vehicles that comprises an energy storage system having battery racks, connectors connectable to electric vehicles, bidirectional DC/DC converters and a control module. Each bidirectional DC/DC converter is connected to the battery racks, and to the power source or to one of the connectors. The bidirectional DC/DC converters adapt the power source output voltage to the battery racks input voltage and the battery racks output voltage to the electric vehicle input voltage. The control module is communicatively coupled to the energy storage system, the connectors and the bidirectional DC/DC converters. The control module monitors the status of the battery racks and the power charging requirements of the electric vehicle, selects the bidirectional DC/DC converters to feed the connectors and regulates the power delivered by the selected bidirectional DC/DC converters based on the power charging requirements of the electric vehicle.

## Description

### TECHNICAL FIELD

In general, the present invention relates to fast charging systems for electric vehicles, and more particularly, to portable and modular charging devices for electric vehicles.

### STATE OF THE ART

In a society that demands to do not depend on finite and polluting resources such as fossil fuels, that only in the transport sector account for around a 14% of total greenhouse gas emissions, the drive of governments, companies and users towards the development of more sustainable and efficient modes of transport is significantly increasing.

Nowadays, the most reliable alternative to the mobility based on fossil fuels is the electric mobility, in which the energy, previously obtained from the electric grid, and preferably generated by renewable power plants, is stored in batteries.

In the last decades there have been important advances in the search for solutions to the main drawbacks of the electric mobility, mainly, high manufacturing costs, loss of battery durability, reduced autonomy and lack of recharging infrastructures. Nowadays, manufacturing costs are falling rapidly due to the economy of scale and the capacity loss in modern lithium ion batteries is significantly decreasing. However, the autonomy of the electric vehicles is still far from their internal combustion vehicles counterparts and, despite of there are countries like Norway or Netherlands with important deployed charging networks, it still remains a lack of charging station in most countries. These two handicaps aggravate each other, since the deploy of a reliable charging infrastructure is the only way to offset the reduced autonomy of the electric vehicles.

The simplest method of charging an electric vehicle uses the on-board charger that incorporates most of the current electric vehicle models that is connected to domestic single-phase AC sockets. The AC current from the domestic grid is rectified by the AC/DC converter incorporated in the vehicle itself, so that said current can be stored as DC current in the batteries of the vehicle. Typically, home charging points have a power rating of 3.7 kW and 7.2 kW and are associated with overnight charging. This charging mode can satisfy most daily driving, but in order to provide support for daily travels and specially to enable long-distance travel a faster charging mode is needed, i.e., with a 7.2 kW charging point a typical 40 kWh battery takes about 6 hours to charge from empty-to-full.

AC fast chargers of up to 43 kW are also known, in which the AC/DC and DC/DC conversion stages are carried out by corresponding power converters installed inside the vehicle. The size of the converters, and therefore the power they are capable of delivering, are limited by the space available in the vehicle. In addition, the weight of converters with powers higher than 22 kW is considerable, so in vehicle structures that already supports the weight of the batteries, the additional weight of the converters is a major drawback. Therefore, it is difficult to find electric vehicle with AC/DC power converters with powers higher than 43 kW installed on board.

Therefore, DC chargers are the most widespread solution for fast charging because the AC/DC power stage is installed in the external recharging facility and not on board the vehicle, so DC power is delivered directly to the batteries. This mode is capable of providing the user with a charging experience similar in time to that of refuelling a combustion vehicle, i.e., a 50 kW DC fast charger requires about 1 hour to charge a 40 kWh battery from empty-to-full, while a 350 kW DC ultra-fast charger would take about 10 minutes to deliver the same amount of energy.

However, high power DC fast recharging devices are expensive and may become unfeasible depending on the electric distribution network design of each area. These fast chargers generally need having access to the medium-voltage grid, so the start-up times are very high due to utility or road operator requirements and the high power consumed imply high fixed operating costs. In order to avoid the need for access to a medium-voltage connection point, different solutions have been implemented. For example, combustion generators or intermediate batteries have been used to complement the energy provided by the connection points in moments of higher demand. Distributed generation with renewable energies, with or without batteries, has been also implemented to support the network during high demand periods. Nonetheless, these solutions are expensive and significantly increase complexity of the electric distribution network designs.

To sum up, current electric distribution networks and chargers for charging electric vehicles present many drawbacks. Some of these drawbacks are:
- there is a need of deploying a high-power DC fast charger network. Today, these high-power DC fast chargers are the most developed and convenient technology for providing users with a recharging experience that is comparable in time to the refuelling of combustion vehicles;
- there is a lack of power availability at certain points in the electric distribution networks that become infeasible the deploy of fast charging station unless transformer and distribution upgrades are made;
- current start-up times for installation of an electric vehicle charger connected to the medium-voltage grid are very high due to bureaucratic and technical requirements;
- high OPEX (operational expenditures) costs in recharging infrastructures associated with electricity billing (high fixed costs due to high contracted power);
- current electric installations are generally oversized in order to be able to provide service during maximum power peaks (punctual increases in demand require oversizing permanent installations);
- electric distribution networks have to ensure avoidance of supply interruption since a fault in a particular point of electric distribution network may affect the entire grid; and
- there is also a need of integrating renewable power energies in the electric vehicle recharging infrastructures.

Therefore, there is still the need in the state of the art of a solution that is able to overcome, or at least minimize, all the problems mentioned above.

### DESCRIPTION OF THE INVENTION

A first object of the invention is a portable and modular charging device for electric vehicles. As used herein, the term "electric vehicle" may refer to any vehicle that uses one or more electric motor for propulsion, including Battery Electric Vehicles (BEV) and Plug-in Hybrid Electric Vehicles (PHEVs), among others. Besides, the term "portable" in this context may refer to charging devices with the capacity of being carried or moved from one location to another. For example, the portable charging device may be easily carried on a truck or van and transported from the location where the portable charging device is charged with electric energy to a different location where the portable charging device is to charge the electric vehicles. As used herein, the term "modular" may refer to the ability of the charging device to be connected in series or in parallel to other charging devices for charging electric vehicles such that the storage capacity can be expanded in case the energy needs may be increased. The term "modular" in this context may further refer to the ability of modifying the storage capacity of the charging device by adding or removing battery units or modules to/from the energy storage system of the charging device in case the energy needs may vary.

The portable charging device comprises an energy storage system that, in turn, comprises a plurality of battery racks. This energy storage system is configured to store DC power received from a power source. The portable charging device may incorporate a connector to be electrically coupled to another connector of the power source. In addition, this connector of the portable charging device may comprise an electricity counter to measure the electrical energy provided by the power source to the portable charging device. As used herein, the term "battery rack" may refer to a set of battery units or modules connected to each other and having a common power input and a common power output. Each battery rack of the energy storage system incorporates all the protections according to its needs, as well as a battery management system (BMS) that monitors the battery rack status, including monitoring its battery charge level (as a percentage of fully charged), the charge status (charging or discharging), input and output voltages, input and output currents, temperature, etc.

The portable charging device further comprises a plurality of connectors connectable to electric vehicles and configured to provide the DC power stored in the energy storage system to the electric vehicles, and at least one bidirectional DC/DC converter. These connectors may comprise electricity counters to measure the electrical energy provided by the portable charging device to the electric vehicles. Each bidirectional DC/DC converter is connected to at least one battery rack of the plurality of battery racks. Additionally, each bidirectional DC/DC converter is connected to the power source or to one of the connectors. When the bidirectional DC/DC converter is connected to the power source is for charging the battery racks the particular bidirectional DC/DC converter is connected to. When a bidirectional DC/DC converter is connected to a particular connector is for providing the DC power stored in the battery racks connected to that bidirectional DC/DC converter to the electric vehicle that has been connected to that particular connector. When the energy storage system is to be charged with electricity from the power source, these bidirectional DC/DC converters are configured to adapt the output voltage of the power source, preferably a DC power source, to the input voltage of the battery racks. Alternatively, when the electric vehicles are to be charged with the electricity stored in the energy storage system, the bidirectional DC/DC converters are configured to adapt the output voltage of the battery racks to the particular input voltage of the electric vehicle. For example, the bidirectional DC/DC converters may operate in a voltage range between 150V-1000V allowing that the input/output voltage of the battery racks may range between 250V-800V and the input voltage of the power source and the output voltage of the portable charging device may range between 150V-1000V.

The portable charging device also comprises a control module communicatively coupled to the energy storage system, to the at least one connector and to the at least one bidirectional DC/DC converter. This control module is configured to monitor the status of the battery racks and the power charging requirements of the electric vehicles connected to the connectors. The control module is configured to select one or more bidirectional DC/DC converters to feed a particular connector to which a particular electric vehicle is connected. The control module is also configured to regulate the power delivered by each one of the selected bidirectional DC/DC converters. The control module will select the bidirectional DC/DC converters and regulate the power delivered by each one of the selected converters based on the power charging requirements of the particular electric vehicle. Further, the control module may be communicatively coupled to the electricity counters of the connectors of the portable charging device. The control module may determine, based on the measures of said counters, the energy flows inside the portable charging device and calculate the energy efficiency of the system (portable charging device, power source and electric vehicles).

In some embodiments, all the electronics and components of the portable charging device may be located inside a receptacle. For example, the portable charging device may be integrated into a cabinet, container, etc. The receptacle may comprise sensors, such as temperature or moisture sensors, among others, to monitor the operation conditions inside the receptacle. These sensors may be communicatively connected to the control module such that an alert (flashing lights, alert sound or a message sent to a remote electronic device) may be emitted by the control module when the operation conditions inside the receptacle are not adequate.

In some embodiments, the BMS's of the respective battery racks may constantly or periodically send the battery rack status to the control module. In some other embodiments, there may be one central BMS communicatively coupled to the respective BMS's of the battery racks and to the control module, said central BMS will centralize all the information gathered by the distributed BMS's. All these communications between the energy control system and the control module may be carried out via a communications interface or a communications bus such as a CAN (Controller Area Network) bus or a RS-485 protocol, among others, that use OpenCAN or Modbus RTU protocols.

In some embodiments, the communications between the bidirectional DC/DC converters and the electric vehicles may be made through a CAN bus communication circuit (e.g. for CHAdeMO plug) or through a PLC communication circuit (e.g., for CCS-COMBO plugs) and using, e.g., an Open Charge Point Protocol (OCPP). The connectors act as interfaces between the electric vehicles and the portable charging device. The communications between the bidirectional DC/DC converters and the connectors, and the control module may be performed by a CAN bus or a RS-485 protocol.

In some embodiments, the portable charging device comprises one single bidirectional DC/DC converter connected to all the battery racks of the energy storage system. The bidirectional DC/DC converter is further adapted to provide the DC power stored in the energy storage system to the connector the electric vehicle is connected to. The bidirectional DC/DC converter may be connected to the power source to charge all of the battery racks of the energy storage system or may be connected to one of the connectors (to which an electric vehicle is connected) to charge the electric vehicle with the DC power delivered by all the battery racks. Therefore, in such embodiment, the control module selects the one single bidirectional DC/DC converter to charge the electric vehicle and regulates the DC power delivered by said bidirectional DC/DC converter based on the power charging requirements of the particular electric vehicle.

This solution, with one single bidirectional DC/DC converter, one or more battery racks and a plurality of connectors (but allowing the connection of one vehicle at the same time) presents a simple and compact design and needs low maintenance. Besides it is cheaper than other solutions and is easy to manage.

In some other embodiments, the portable charging device comprises a plurality of bidirectional DC/DC converters. Each bidirectional DC/DC converter is connected to a particular and independent set of battery racks of the plurality of battery racks of the energy storage system. In other words, each bidirectional DC/DC converter is connected to a set (one or more) of battery racks that can only be charged or discharged by said bidirectional DC/DC converter. Thus, each bidirectional DC/DC converter with its corresponding battery racks is able to operate independently from the rest of assemblies of bidirectional DC/DC converters and battery racks of the portable charging device. In such embodiment, the control module is configured to select the bidirectional DC/DC converters to feed the particular connector the electric vehicle is connect to and to regulate the power delivered by the selected bidirectional DC/DC converters based on the power charging requirements of the particular electric vehicle and on the status of the corresponding set of battery racks each bidirectional DC/DC converter is connected to.

Therefore, each bidirectional DC/DC converter is configured to provide DC power to a particular connector based on the battery charge level of the corresponding set of battery racks and the power charging requirements of the electric vehicle that is connected to the particular connector. Then, depending on the number of available bidirectional DC/DC converters, the battery rack status and the power charging requirements of the electric vehicles, this portable charging devices will be able to recharge more than one electric vehicle at the same time. In particular, the portable charging device may be able to charge as many electric vehicles as DC/DC converters has installed therein.

This solution, with each bidirectional DC/DC converter being connected to an exclusive and independent set (one or more) of battery racks, and a plurality of connectors is easy to manage, provides a modular and expandable design and allows recharging more than one vehicle at the same time. Additionally, in the event of failure of one bidirectional DC/DC converter, the portable charging device is able to keep operating with the rest of bidirectional DC/DC converters.

In some other embodiments, the portable charging device comprises a plurality of bidirectional DC/DC converters where all the bidirectional DC/DC converters are connected to all the battery racks of the energy storage system. In such embodiments, the control module is configured to select the bidirectional DC/DC converters that are going to feed the particular connector to which the electric vehicle is connected and to regulate the power delivered by the selected bidirectional DC/DC converters based on the power charging requirements of the particular electric vehicle. Then, these portable charging devices will be able to recharge more than one vehicle at the same time.

This solution, with all the bidirectional DC/DC converters connected to all the battery racks of the energy storage system, and having a plurality of connectors provides a modular and expandable design, allows recharging more than one vehicle at the same time and reduces the need of control equipment in the energy storage system. Additionally, in the event of failure of a bidirectional DC/DC converter, the portable charging device is able to keep operating with the rest of bidirectional DC/DC converters and in the event of failure in one the battery racks, the portable charging device is able to keep recharging the electric vehicles connected to the device with the rest of available battery racks.

In some embodiments, each battery rack comprises a plurality of battery units and each battery unit comprises a plurality of power cells. Each battery rack may comprise as many battery units as necessary to provide the voltage, current and energy values required by the system. Besides, the battery racks may comprise the same or a different number of battery units. As used herein, the term "battery unit" may refer to systems in which a set of power cells are installed in series or parallel according to the voltages and currents required. These battery units comprise the necessary protections for each of the cells. Each battery unit also comprises a Battery Management Unit (BMU) that is configured to monitor and send the battery unit status information, including, charge level, voltage, current, temperature, etc., of the particular battery unit to the BMS of the battery rack. The battery unit may also comprise a cooling system for regulating the temperature of the power cells and avoiding damages. Each battery unit may comprise as many power cells as necessary to provide the voltage, current and energy values required by the system. Besides, the battery units may comprise the same or a different number of power cells.

In some embodiments, the power cells are selected from a group comprising Lithium-ion (Li-ion) power cells, Lead-acid power cells, Nickel-Cadmium (Ni-Cd) power cells, Nickel-Metal Hydride (Ni-MH) power cells and any combination thereof. Preferably, the power cells may be Li-ion power cells. These Li-ion power cells may be Cobalt/Lithium power cells, Lithium/Magnesium power cells or Lithium/Iron power cells, among other Li-ion power cells. Preferably, the power cells may be LiFePO4 power cells operating at voltages between 2.5V-3.65V with a nominal voltage of 3.2V. These Lithium/Iron power cells show expanded lifespan than other technologies. Alternatively, any other kind of power cell may be used for storing energy. Thus, the energy storage system may use any other available technology for storing electrical energy in DC, preferably with power cells connected in series to operate at high DC voltages (e.g., 100V-1000V) so that the voltage ranges of the energy storage system is able to operate at voltages that are similar to or higher than those required by the electrical vehicles. This ensures that minimum voltage variations are generated during the electric vehicle charging operation and energy losses during the voltage regulation to that required by the electric vehicle are minimized.

In some embodiments, the bidirectional DC/DC converters may be directly connected to the power source, e.g., a DC power source. Alternatively, the bidirectional DC/DC converters may be connected to the power source by interposition of an AC/DC converter. For example, the bidirectional DC/DC converters may be connected to an AC power source, such as a wind turbine, by interposition of an AC/DC converter to convert the AC output power of the wind turbine to the DC input power of the portable charging device.

In some embodiments, the power source may be a DC power source, preferably a DC renewable power source, and more preferably a photovoltaic power plant. Since photovoltaic panels generate electricity in DC, the power generated in said photovoltaic panels can be stored in the energy storage system by the sole interposition of the DC/DC converters. Therefore, using photovoltaic panels or any other DC power source directly connected to the portable changing device avoids using inverters or rectifiers, reduces costs and increases process efficiency.

In some embodiments, the connectors may comprise at least one of a CSS-Combo (European Combined Charging System) plug socket and a CHAdeMO plug socket. These connectors may further comprise other types of plug sockets such as CCS type 1 (U.S. Combined Charging System) or GB/T.

In some embodiments, the bidirectional DC/DC converters are galvanically isolated to electrically isolate the energy storage system from the power source and the electric vehicles. The galvanic isolation may be applied by high frequency transformation. If the bidirectional DC/DC converters do not have a connection to ground (earth), the galvanic isolation may be needed as a protection against derivations generated by the components of the portable charging device, the power source or the electric vehicles This galvanic isolation ensures that any power or current peak generated into the power source or in the electric vehicles do not affect the energy storage system of the portable charging device.

In some embodiments, the control module is communicatively couplable to a BMS of the electric vehicle and to the battery racks to determine the power charging requirements of the electric vehicle and the energy available to be delivered to the electric vehicle. When the electric vehicle is connected to one of the connectors of the portable charging device, the BMS of the electric vehicle may send, via the CAN bus communication circuit or via the PLC communication circuit, a message to the control module informing about the power charging requirements of this electric vehicle. With the information received form the BMS of the electric vehicle, the control module may be further configured to determine the voltage and/or current being delivered to the electric vehicle by the corresponding bidirectional DC/DC converters based on the ambient temperature, the battery charge level of the batteries of the electric vehicle, the capacity of the batteries of the electric vehicle and the current battery charge level of the battery racks.

A second object of the present invention is a method for charging an electric vehicle. The method comprises:
connecting the portable charging device defined in the previous paragraphs to a power source, preferably a DC power source. This power source is located in a first location. To perform this operation, the control module will connect the bidirectional DC/DC converters through which the corresponding battery racks are to be charged to the power source. Said bidirectional DC/DC converters will adapt the output voltage of the power source to the input voltage of the battery racks;
at least partially charging the energy storage system with DC power from the power source. Thus, the energy storage system may be partially or fully charged with power from the power source;
disconnecting the portable charging device from the power source;
moving the portable charging device to a second location, this second location being different from the first location;
determining, by the control module, the status of the battery racks of the energy storage system. The status of the battery racks comprises their battery charge level (as a percentage of fully charged), their charge status (charging or discharging), input and output voltages, input and output currents, temperature, etc.;
detecting, by the control module, a connection of a particular electric vehicle to one of the connectors of the portable charging device;
receiving, by the control module, power charging requirements of the electric vehicle from a battery management system of the electric vehicle;
selecting, by the control module, the bidirectional DC/DC converters that are going to feed the connector to which the electric vehicle is connected based on at least the power charging requirements of the electric vehicle. At this point of the method, the control module will connect these selected bidirectional DC/DC converters to this connector; and
regulating, by the control module, the power delivered by the selected bidirectional DC/DC converters based on at least the power charging requirements of the particular electric vehicle.

The portable charging device for electric vehicles and the method for charging electric vehicles herein described present several advantages and/or differences compared with previous devices and techniques. In particular, this portable charging device is a portable and modular grid-independent fast charging station that allows charging electric vehicles at any location with no need to installing charging station networks. The design of the portable charging device herein described is simplified and the number of equipment is significantly reduced. Said device and method improve the efficiency of the cycle of generation-consumption of energy and allow direct charging from photovoltaic renewable energy facilities. In addition, this system is portable, modular and easily expandable, in order to adjust it to the requirements of each of the charging possibilities of electric vehicles.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a block diagram of a portable charging device for electric vehicles with one single bidirectional DC/DC converter, according to a particular embodiment of the invention.
Figure 2 shows a block diagram of a portable charging device for electric vehicles with four bidirectional DC/DC converters, each converter being connected to a particular and independent battery rack, according to another particular embodiment of the invention.
Figure 3 shows a block diagram of a portable charging device for electric vehicles with four bidirectional DC/DC converters, each converter being connected to all the battery racks, according to another particular embodiment of the invention.
Figure 4 shows a block diagram of the communication system of the energy storage system, according to a particular embodiment of the invention.
Figure 5 shows the block diagram of the portable charging device of Figure 3, with all the bidirectional DC/DC converters feeding the same connector.
Figure 6 shows the block diagram of the portable charging device of Figure 3, with two bidirectional DC/DC converters feeding one of the connectors, and the other two bidirectional DC/DC converters feeding the other connector.
Figure 7 shows the block diagram of the portable charging device of Figure 3, with three bidirectional DC/DC converters feeding one of the connectors, and a fourth bidirectional DC/DC converter feeding the other connector.
Figure 8 shows the block diagram of the portable charging device of Figure 3, with the energy storage system being charged by the power source through the four bidirectional DC/DC converters.
Figure 9 shows the block diagram of the portable charging device of Figure 3, with the energy storage system being charged by the power source through two bidirectional DC/DC converters and the other two bidirectional DC/DC converters feeding one of the two connectors.

### DETAILED DESCRIPTION OF THE INVENTION

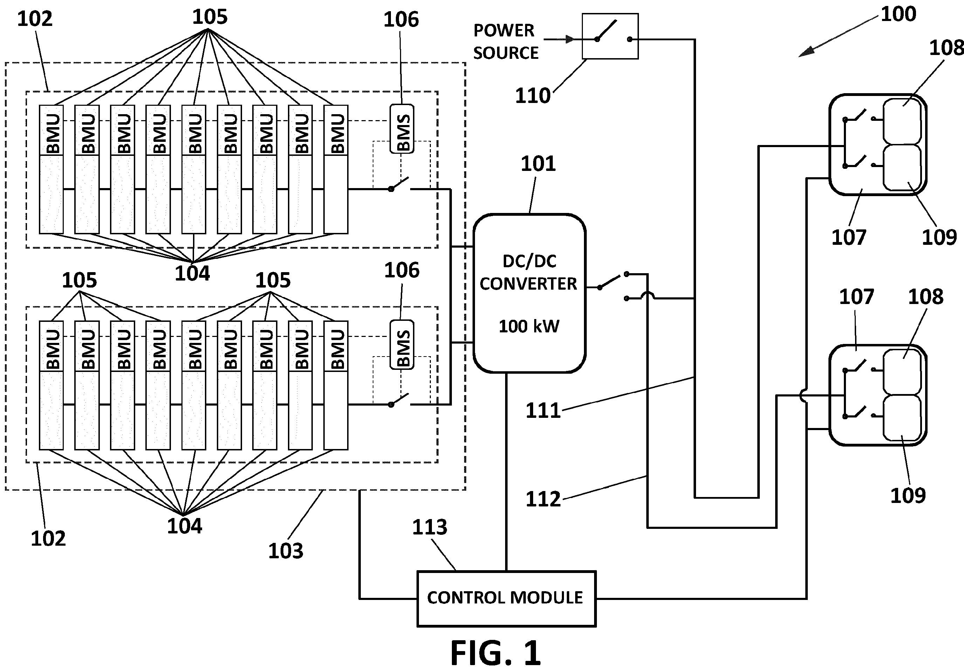

Figure 1 shows a block diagram of a portable charging device 100 for electric vehicles with one single bidirectional DC/DC converter 101, according to a particular embodiment of the invention. It should be understood that the device 100 of Figure 1 may include additional components and that some of the components described herein may be removed and/or modified without departing from a scope of the described device 100. Additionally, implementation of the device 100 is not limited to such embodiment.

The portable charging device 100 comprises one single 100kW bidirectional DC/DC converter 101 (the nominal power of the power converter is 100kW) connected to two battery racks 102 (connected in parallel) of the energy storage system 103. The bidirectional DC/DC converter 100 is galvanically isolated to electrically isolate the energy storage system 103 from the power source and the electric vehicles. Each battery rack 102 is formed by nine battery units 104 which are monitored by respective battery management units (BMUs) 105. The BMUs 105 are configured to monitor the status of the respective battery units 104 (the status including, charge level, voltage, current, temperature, the state of health (SoH), etc., of the battery units 104) and to send these statuses to the battery management system (BMS) 106 of the corresponding battery rack 102. These battery units 104 may comprise the necessary protections (e.g., a magneto-thermal switches to be protected against current overloads, short circuits and surges) for each of the power cells (not shown in this figure) that form each battery unit 104. For example, the battery units 104 may be formed by 16 LiFePO4 power cells connected in series and operating at voltages between 2.5V-3.65V with a nominal voltage of 3.2V. Thus, each battery rack 102 may reach 460.8V of nominal voltage with maximum voltage peaks of 525.6V. The battery units 104 may also comprise a cooling system for regulating the temperature of the power cells and avoiding damages. In addition, the battery racks 102 comprises a current breaker, e.g., a switch that may be a magneto-thermal switch, to protect the battery units 104 against current overloads, short circuits and surges generated into the power source or the electric vehicles. This breaker disconnects the battery rack 102 from the rest of the components of the portable charging device 100 in case any problem, e.g. a temperature increase or an anomalous behaviour of any of the battery units 104, is detected by the BMS 106. In some implementations, all the battery units 104 may also integrate its own breaker (not shown in this figure) to disconnect the particular battery unit 104 from the rest of the components of the battery rack 102 in case any problem is detected by the corresponding BMU 105.

The portable charging device 100 also comprises two connectors 107 for charging electric vehicles. In turn, each connector 107 comprises one CSS-Combo plug socket 108 and one CHAdeMO plug socket 109. In this way, electric vehicles having any of the two type of plugs can be connected to the portable charging device 100 via the plug sockets 108-109. The device 100 further comprises a third connector 110 connectable to a power source, preferably a DC power source, through which the energy storage system 103 can be charged with energy coming form said power source. This power source may be, for example, a photovoltaic facility.

The 100kW bidirectional DC/DC converter 101 can only be connected to one of the two connectors 107 via respective electric power lines 111-112 at a time and the two connectors 107 can only provide power to one of the two plug sockets 108-109 at a time. Besides, the third connector 110 is connected to the electric power line 111 such that the energy storage system 103 can be charged with the energy coming from the power source via this electric power line 111 and the 100kW bidirectional DC/DC converter 101. Thus, this electric power line 111 can be used for providing energy received from the energy storage system 103 or directly from the power source to one of the connectors 107. Alternatively, this electric power line 111 can be used for charging the energy storage system 103 with energy form the power source.

The portable charging device 100 further comprises a control module 113 that is communicatively coupled to the energy storage system 103 (in particular to the BMS's 106 of the battery racks 102), to the connectors 107 and to the 100kW bidirectional DC/DC converter 101. When an electric vehicle is connected to any of the two connectors 107 the control module 113 firstly detects its presence and connects the 100kW bidirectional DC/DC converter 101 to the corresponding electric power line 111-112. Then, the BMS (not shown) of the vehicle sends a message to the control module via the communications bus, e.g., a CAN bus, informing about the power charging requirements of the vehicle and other additional information (e.g., sate of charge of the vehicle, required voltage, maximum current, charging time, required energy, battery temperature, safety parameters, that the connectors if the vehicle and the portable charging device are properly connected to each other, and that all safety protocols for recharging the vehicle have been met). Based on said power charging requirements, the control module 113 regulates the output power of the 100kW bidirectional DC/DC converter 101 to provide the required DC power, from the energy storage system 103, to the connector 107 the electric vehicle is connected to. More particularly, the control module 113 instruct the 100kW bidirectional DC/DC converter 101 to adapt the output voltage and current of the energy storage system 103 to the input voltage and current of the batteries of the electric vehicle. When the 100kW bidirectional DC/DC converter 101 is providing energy to the connector 107, all the battery racks 102 are discharged simultaneously.

When the 100kW bidirectional DC/DC converter 101 is connected to the power source via the third connector 110, all the battery racks 102 are charged simultaneously. Then, the control module 113 instruct the 100kW bidirectional DC/DC converter 101 to adapt the output voltage and current of the power source to the input voltage and current of the energy storage system 103.

The battery racks 102 may be charge/discharged at a voltage that may range from 250V to 800V, while the bidirectional DC/DC converters 101 may receive power from the power source and may provide power to the connectors 107 at a voltage that may range from 150V to 1000V. This significantly improves the performance of the device 100 and minimizes losses in the power distribution, making it possible to charge more power without cooling the connectors 107, reaching charge currents of up to 200 A. However, since the portable charging device is modular, the power provided by the device 100 could be extended by including more DC/DC converters and changing the connectors for refrigerated ones to be able to carry out loads of up to 350kW.

While Figure 1 shows two battery racks formed by nine battery units, there may be a different number of battery racks forming the energy storage system with each battery rack being formed by the same or a different number of battery units. Besides, while Figure 1 shows a 100kW bidirectional DC/DC converter, the maximum power supplied by the converters may be different. Similarly, the number of connectors and the number of plug sockets and its type may be also different.

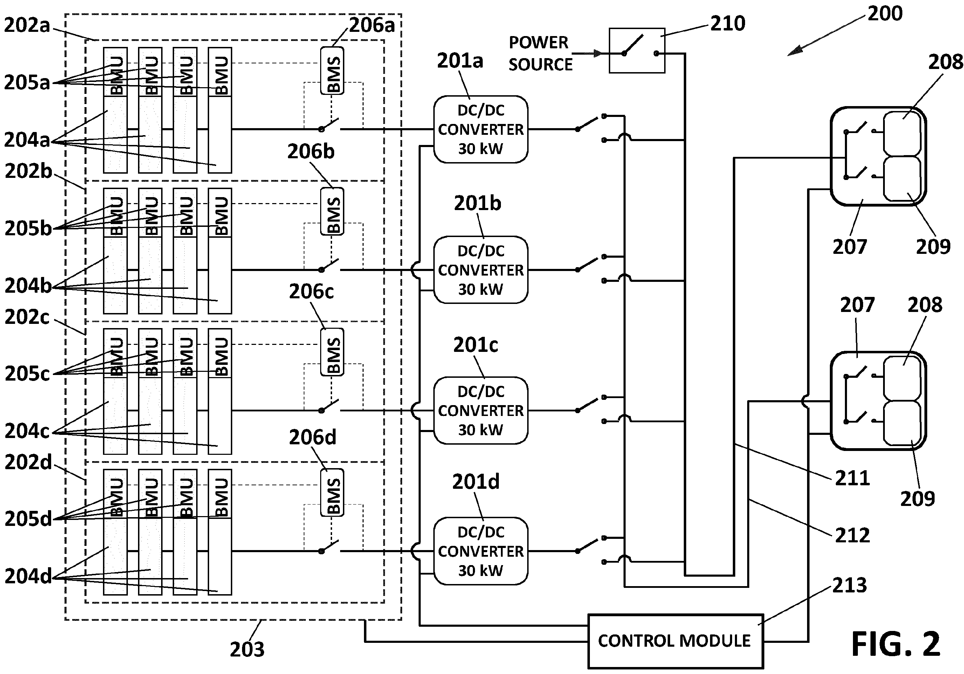

Figure 2 shows a block diagram of a portable charging device 200 for electric vehicles with four bidirectional DC/DC converters 201a-d, each converter 201a-d being connected to a particular and independent battery rack 202a-d, according to another particular embodiment of the invention. It should be understood that the device 200 of Figure 2 may include additional components and that some of the components described herein may be removed and/or modified without departing from a scope of the described device 200. Additionally, implementation of the device 200 is not limited to such embodiment.

The portable charging device 200 comprises four 30kW bidirectional DC/DC converters 201a-d (the nominal power of each converters is 30 kW, reaching a combined nominal power of 120 kW). The 30kW bidirectional DC/DC converter 201a is connected to the battery rack 202a, the 30kW bidirectional DC/DC converter 201b is connected to the battery rack 202b, the 30kW bidirectional DC/DC converter 201c is connected to the battery rack 202c and the 30kW bidirectional DC/DC converter 201d is connected to the battery rack 202d. Thus, each bidirectional DC/DC converter 201a-d with its corresponding battery rack 202a-d is able to operate independently from the rest of assemblies (converter + battery rack) of the portable charging device 200. In such embodiment, each battery rack 202a-d is formed by four battery units 204a-d which are monitored by respective BMUs 205. For example, the battery units 204a-d may be formed by a 16 LiFePO4 power cells operating at voltages between 2.5V-3.65V with a nominal voltage of 3.2V. Thus, each battery rack 202a-d may reach 204.8V nominal voltage with maximum voltages of 3.65x16x4 = 233.6V.

The bidirectional DC/DC converters 201a-d comprise galvanic insulation to protect the battery units 204a-d against any voltage or current peak generated into the power source or the electric vehicles. In turn, the battery racks 202a-d comprise breakers to disconnect the respective battery racks 202 from the rest of the components of the portable charging device 200 in case any problem is detected by the corresponding BMS 206.

In such embodiment, the control module 213 is configured to select those bidirectional DC/DC converters 201a-d which are going to provide energy to the particular connector 207 the electric vehicle is connect to. The control module 213 is also configured to regulate the power delivered by the selected bidirectional DC/DC converters 201a-d. The control module 213 will select the converters 201a-d and regulate their output power based on the power charging requirements of the particular electric vehicle and on the status of the battery racks each bidirectional DC/DC converter 201a-d is connected to. For example, the control module 213 may only select those converters 201a-d being connected to a battery rack 202a-d having its battery charge level over a predefined threshold or may just select those converters 201a-d being connected to the battery racks 202a-d having the highest battery charge level.

The connectors 207 also comprise one CSS-Combo plug socket 208 and one CHAdeMO plug socket 209 to connect electric vehicles having any of these two types of plugs. The device 200 further comprises a third connector 210 to receive energy from a power source, preferably a photovoltaic facility.

Each 30kW bidirectional DC/DC converter 201a-d can be connected to only one of the two connectors 207 via respective electric power lines 211-212 at a time and the two connectors 207 can only feed one of the two plug sockets 208-209 at a time. However, different 30kW bidirectional DC/DC converters 201a-d may be connected to different connectors 207 to charge more than one vehicle at the same time. In such embodiment, the control module 213 is also configured to select those bidirectional DC/DC converters connected to the battery racks 202a-d that are going to be charged. The selected converters 201-a-d, and thus their corresponding battery racks 202a-d, will receive power from the power source via the electric power line 211. This particular design allows charging, for example, battery racks 201a and 201b via the electric power line 211 and the third connector while battery racks 201c and 201d are being discharged for charging a vehicle via one of the two connectors 207.

In such embodiment, the control module 213 firstly detects the connection of an electric vehicle to any of the two connectors 207. Then, the BMS (not shown) of the vehicle sends a message to the control module via the communications bus, e.g., a CAN bus, informing about the power charging requirements of the vehicle. Based on said power charging requirements and on the statuses of the battery racks 202a-d, the control module 213 selects those 30kW bidirectional DC/DC converters 201a-d that are going to provide power to the electric vehicle and regulates the output power of the selected converters 201a-d to adjust the total output power of the selected converters 201a-d to the input power requirements of the electric vehicle.

The battery racks 202a-d may be charge/discharged at a voltage that may range from 250V to 800V, while the bidirectional DC/DC converters 201a-d may receive power from the power source and may provide power to the connectors 207 at a voltage that may range from 150V to 1000V.

While Figure 2 shows four battery racks formed by four battery units, there may be a different number of battery racks forming the energy storage system with each battery rack being formed by the same or a different number of battery units. In addition, the number of converters and its nominal power, as long as the number of battery rack to which they are connected may be different. Similarly, the number of connectors and the number of plug sockets and its type may also vary.

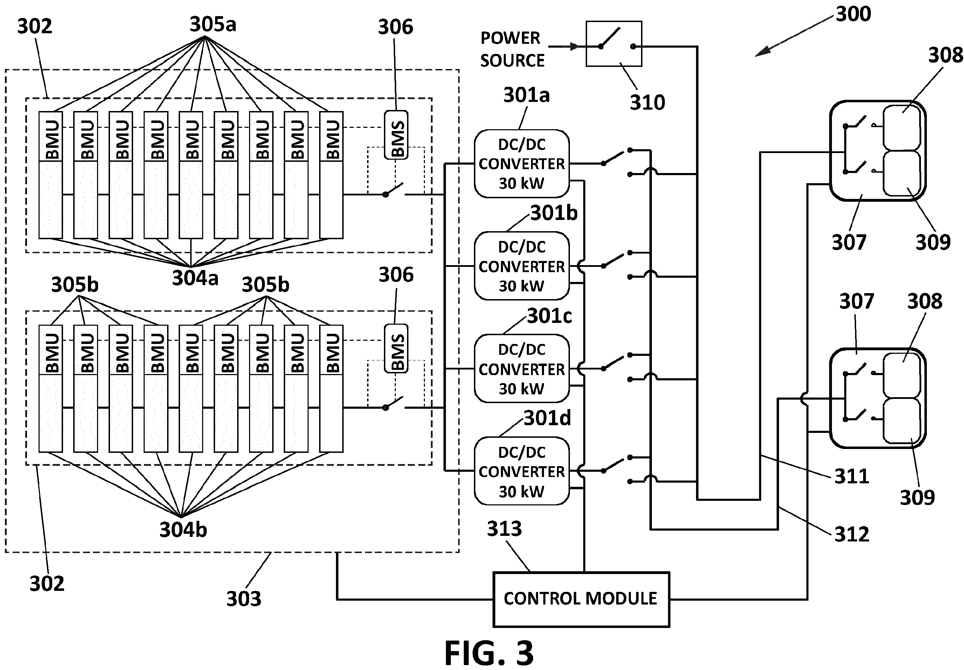

Figure 3 shows a block diagram of a portable charging device 300 for electric vehicles with four bidirectional DC/DC converters 301a-d, each converter 301a-d being connected to all the battery racks 302a-b, according to another particular embodiment of the invention. It should be understood that the device 300 of Figure 3 may include additional components and that some of the components described herein may be removed and/or modified without departing from a scope of the described device 300. Additionally, implementation of the device 300 is not limited to such embodiment.

The portable charging device 300 comprises four 30kW bidirectional DC/DC converters 301a-d (the nominal power of each converters is 30 kW, reaching a combined nominal power of 120 kW). The four 30kW bidirectional DC/DC converters 301a-d are connected to the two battery racks 302a-b. In such embodiment, the battery racks 302a-b are charged or discharged simultaneously. The two battery racks are formed by nine battery units 304 which are monitored by respective BMUs 305 communicatively connected to the BMS 306 of the corresponding battery rack 302a-b. For example, the battery units 304 may be formed by 16 LiFePO4 power cells operating at voltages between 2.5V-3.65V with a nominal voltage of 3.2V. Thus, each battery rack 102 may reach 460.8V of nominal voltage with maximum voltage peaks of 525.6V. In addition, the bidirectional DC/DC converters 301a-d comprise galvanic insulation to protect the energy storage system 303 against any voltage or current peak generated into the power source or the electric vehicles. The battery racks 302a-b comprise breakers to disconnect the respective battery racks 302a-b from the rest of the components of the portable charging device 300 in case any problem may occur.

In such embodiment, the control module 313 is configured to select those bidirectional DC/DC converters 301a-d which are going to provide energy to the particular connector 307 the electric vehicle is connect to. The control module 313 is also configured to regulate the power delivered by the selected bidirectional DC/DC converters 301a-d. The control module 313 will select the converters 301a-d and regulate their output power based on the power charging requirements of the particular electric vehicle. For example, for an electric vehicle requiring a power input of 44kW, the control module 313 may select converters 301a and 301b and may regulate output power of each converter to 22kW so when combined they provide the 44kW required by the vehicle.

The connectors 307 also comprise one CSS-Combo plug socket 308 and one CHAdeMO plug socket 309 to connect electric vehicles having any of these two types of plugs. The device 300 further comprises a third connector 310 to receive energy from a power source, preferably a photovoltaic facility.

Each 30kW bidirectional DC/DC converter 301a-d can be connected to only one of the two connectors 307 via respective electric power lines 311-312 at a time and the two connectors 307 can only feed one of the two plug sockets 308-309 at a time. However, different 30kW bidirectional DC/DC converters 301a-d may be connected to different connectors 307 to charge more than one vehicle at the same time.

In such embodiment, the control module 313 firstly detects the connection of an electric vehicle to any of the two connectors 307. Then, the BMS (not shown) of the vehicle sends a message to the control module via the communications bus, e.g., a CAN bus, informing about the power charging requirements of the vehicle. Based on said power charging requirements, the control module 313 selects those 30kW bidirectional DC/DC converters 301a-d that are going to provide power to the electric vehicle and regulates the output power of the selected converters 301a-d to adjust the total output power of the selected converters 301a-d to the input power requirements of the electric vehicle.

The battery racks 302a-b may be charge/discharged at a voltage that may range from 250V to 800V, while the bidirectional DC/DC converters 302a-d may receive power from the power source and may provide power to the connectors 307 at a voltage that may range from 150V to 1000V.

While Figure 3 shows two battery racks formed by nine battery units, there may be a different number of battery racks forming the energy storage system with each battery rack being formed by the same or a different number of battery units. In addition, the number of converters and its nominal power, as long as the number of battery rack to which they are connected may be different. Similarly, the number of connectors and the number of plug sockets and its type may also vary.

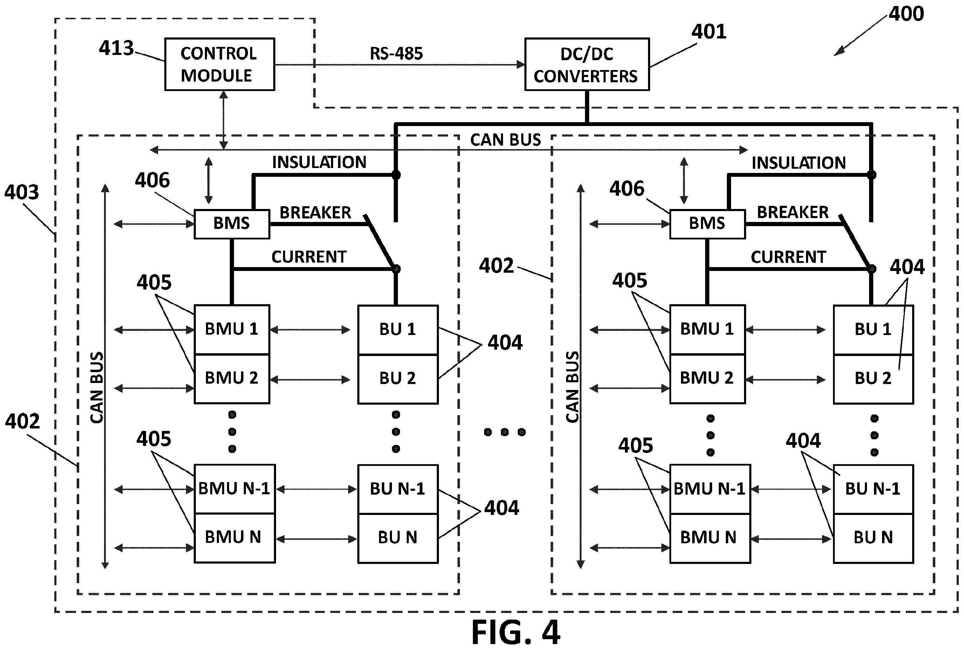

Figure 4 shows a block diagram of the communication system of the energy storage system 400, according to a particular embodiment of the invention. It should be understood that the system 400 of Figure 4 may include additional components and that some of the components described herein may be removed and/or modified without departing from a scope of the described system 400. Additionally, implementation of the device 400 is not limited to such embodiment.

The communications between the BMU's 405 associated to the plurality of battery units 404 of the plurality of battery racks 402 is performed by means of CAN bus. Besides the communications between the BMSs 406 of the different battery racks 402 and the control module 413 are performed by a CAN bus.

The communications between control module 413 and the bidirectional DC/DC converters 401 are carried out by means of a RS-485 protocol. Alternatively, the communications system may use others protocols such as a CAN bus.

Each of the battery racks 402 incorporates the necessary insulation and a current breaker (e.g., a magneto-thermal switches to protect against current overloads, short circuits and surges) to open the electric circuit through which the battery units 404 are charged or discharged in case any problem may be detected by the BMS 406.

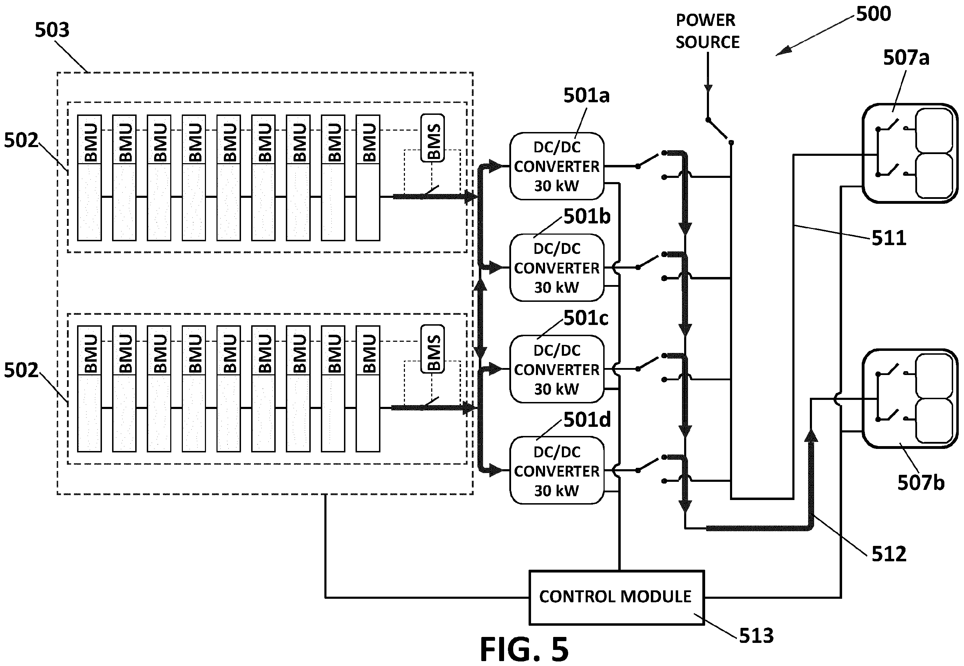

Figure 5 shows the block diagram of the portable charging device of Figure 3, with all the bidirectional DC/DC converters providing power to the same connector.

In such embodiment, there is one electric vehicle connected to one of the two connectors 507, in particular to connector 507b. the control module 513 instruct the 30kW bidirectional DC/DC converters 501a-d to provide its maximum output power to the same connector 507b via the electric power line 512. Then, the vehicle is provided by the portable charging device 500 with its maximum nominal power (the nominal power of each converters 501a-d is 30 kW, reaching a combined nominal power of 120 kW). The two battery racks 502 are simultaneously discharged provide the DC power to the vehicle.

The battery racks 502a-b may be charge/discharged at a voltage that may range from 250V to 800V. The combined output power of the bidirectional DC/DC converters may range from 0 to 120kW, depending on the vehicle requirements, and said power may be supplied to the vehicle at voltages between 150V to 1000V,

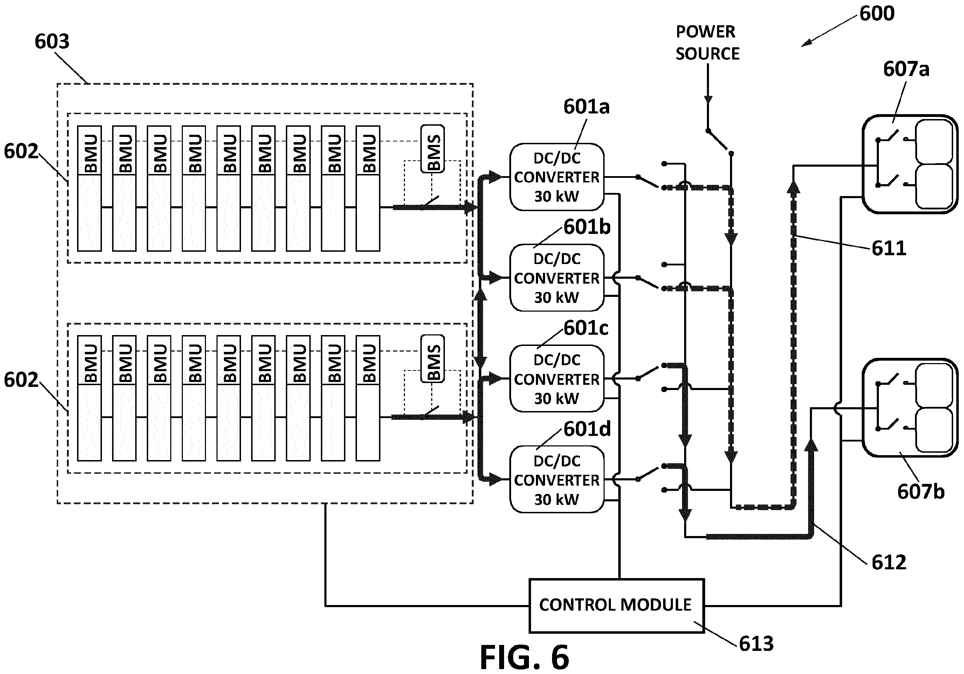

Figure 6 shows the block diagram of the portable charging device of Figure 3, with two bidirectional DC/DC converters 601a-b providing power to one of the connectors 607a, and the other two bidirectional DC/DC converters 601c-d providing power to the other connector 607b.

The control module 613 connects bidirectional DC/DC converters 601a-b to the connector 607a via the electric power line 611 and connects bidirectional DC/DC converters 601c-d to the connector 607b via the electric power line 612. In this way two vehicles can be charged at different charging voltages. In such example, both vehicles may be charged with a maximum power of 60kW.

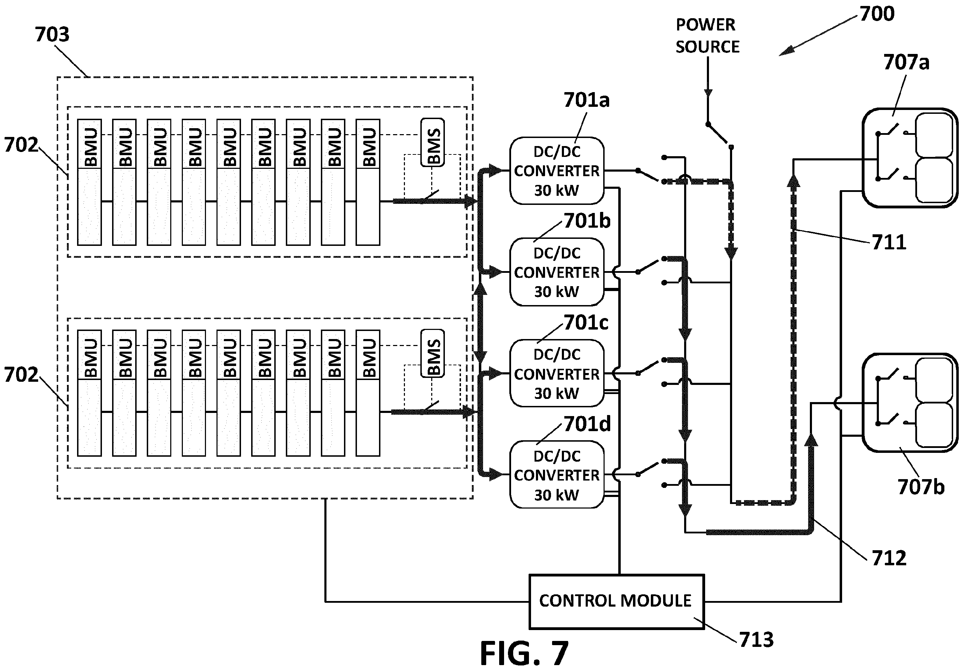

Figure 7 shows the block diagram of the portable charging device of Figure 3, with three bidirectional DC/DC converters 701b-d providing power to one of the connectors 607b, and the other bidirectional DC/DC converter 701a providing power to the other connector 707a.

The control module 713 connects the bidirectional DC/DC converter 701a to the connector 707a via the electric power line 711 and connects bidirectional DC/DC converters 701b-d to the connector 707b via the electric power line 712. In this way two vehicles can be charged at different charging voltages. In such example, the vehicles connected to the connector 707a may be charged with a maximum power of 30kW while the vehicle connected to the connector 707b may be charged with a maximum power of 90kW. The voltage provided to each vehicle may be modified by regulating the output voltage of the corresponding bidirectional DC/DC converters 701a-d.

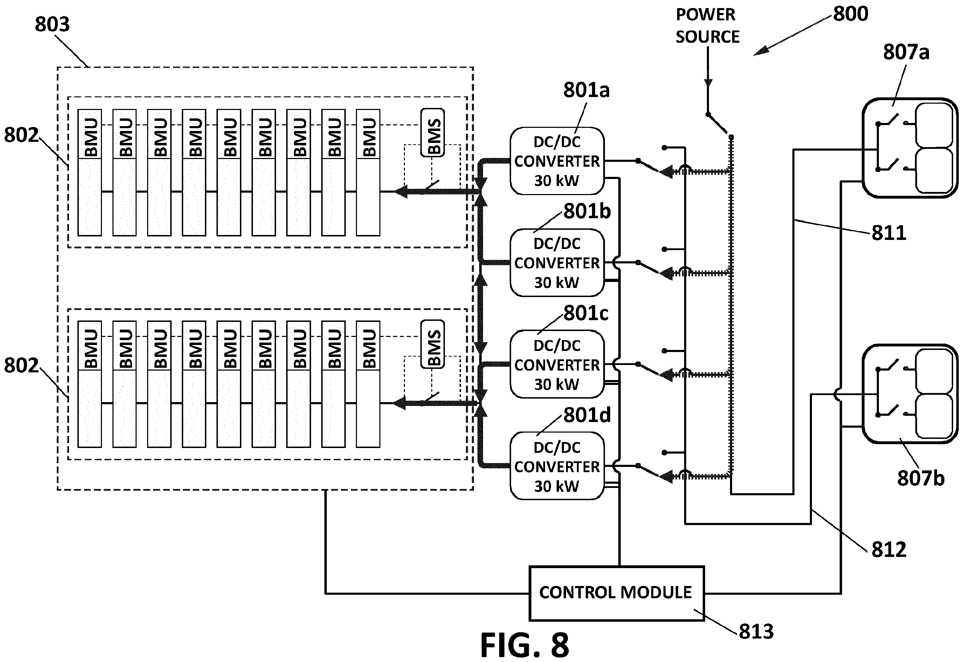

Figure 8 shows the block diagram of the portable charging device of Figure 3, with the energy storage system 803 being charged by the power source through the four bidirectional DC/DC converters 801a-d.

In such example, the four bidirectional DC/DC converters 801a-d are connected to the power source and disconnected from the connectors 807a-b. Therefore, the battery charging operation is carried out at full power with all converters connected to the power source input. Said power input may be of up to 120kW at a voltage that may range from 150V to 1000V

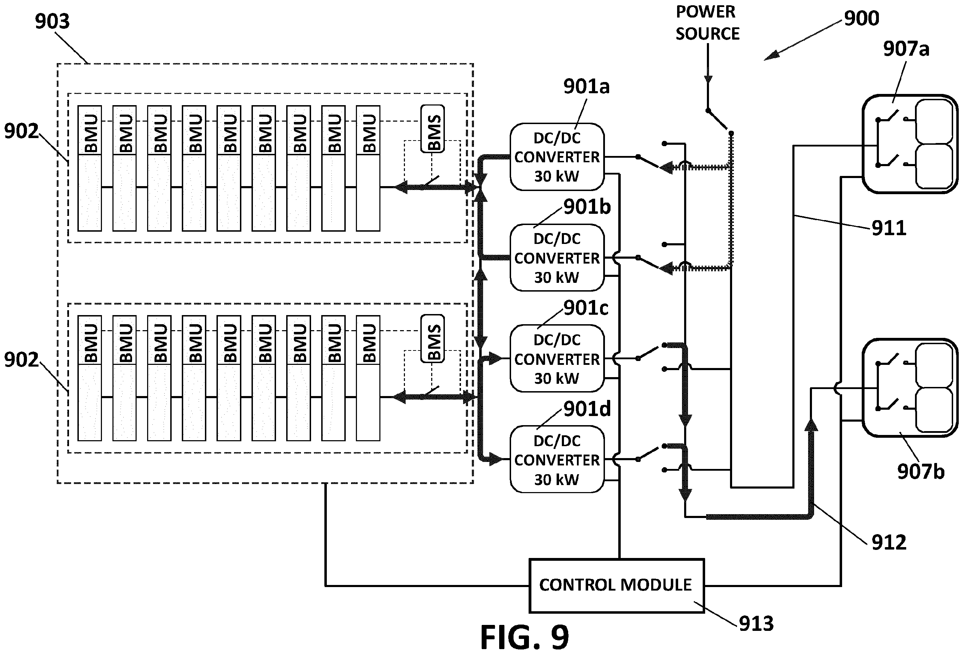

Figure 9 shows the block diagram of the portable charging device of Figure 3, with the energy storage system 903 being charged by the power source through two bidirectional DC/DC converters 901a-b and the other two bidirectional DC/DC converters 901c-d providing power to one of the two connectors.

The portable charging device 900 is configured to charge the battery racks 902 at the same time that electric vehicles connected to the device 900 are being charged. To do that, the control module 913 distributes the operation of the bidirectional DC/DC converters 901a-d such that bidirectional DC/DC converters 901a-b are connected to the power source via the electric power line 912 to charge the battery racks 902 and bidirectional DC/DC converters 901c-d are connected to the connector 907b to charge a vehicle.

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A portable charging device (100) for electric vehicles, **characterized in that** the portable charging device comprises:
an energy storage system (103) comprising a plurality of battery racks (102), the energy storage system (103) being configured to store DC power from a power source;
a plurality of connectors (107) connectable to an electric vehicle and configured to provide the DC power stored in the energy storage system (103) to the electric vehicle;
at least one bidirectional DC/DC converter (101), wherein each bidirectional DC/DC converter (101) is connected to at least one of the plurality of battery racks (102), and further to the power source for charging the at least one of the plurality of battery racks (102) or to one of the connectors (107) for providing the DC power stored in the at least one of the plurality of battery racks (102), and wherein the bidirectional DC/DC converters (101) are configured to adapt an output voltage of the power source to an input voltage of the battery racks and an output voltage of the battery racks to an input voltage of the electric vehicle; and
a control module (113) communicatively coupled to the energy storage system (103), to the plurality of connectors (107) and to the at least one bidirectional DC/DC converter (101), wherein the control module (113) is configured to:
monitor a status of the plurality of battery racks (102) and power charging requirements of the electric vehicles connected to the connectors (107);
select bidirectional DC/DC converters (101) to feed a particular connector (107) the electric vehicle is connected to based on the power charging requirements of the particular electric vehicle; and
regulate the power delivered by the selected bidirectional DC/DC converters (101) based on the power charging requirements of the particular electric vehicle.

2. The portable charging device according to claim 1, comprising one single bidirectional DC/DC converter (101) connected to all the battery racks (102) of the energy storage system (103) and wherein the bidirectional DC/DC converter (101) is adapted to simultaneously charge or discharge all the battery racks (102).

3. The portable charging device according to claim 1, comprising a plurality of bidirectional DC/DC converters (201a-d), each bidirectional DC/DC converter (201a-d) being connected to a particular and independent set of battery racks (202a-d) of the plurality of battery racks and wherein the control module (213) is configured to select the bidirectional DC/DC converters (201a-d) to feed the particular connector (207) the electric vehicle is connect to and to regulate the power delivered by the selected bidirectional DC/DC converters (201a-d) based on the power charging requirements of the particular electric vehicle and on the status of the corresponding set of battery racks (202a-d) each bidirectional DC/DC converter (201a-d) is connected to.

4. The portable charging device according to claim 1, comprising a plurality of bidirectional DC/DC converters (301a-d), all the bidirectional DC/DC converters (301a-d)being connected to all the battery racks (302a-b) of the energy storage system (303) and wherein the control module (313) is configured to select the bidirectional DC/DC converters (301a-d) to feed a particular connector (307) the electric vehicle is connected to and to regulate the power delivered by the selected bidirectional DC/DC converters (301a-d) based on the power charging requirements of the particular electric vehicle.

5. The portable charging device according to any one of the preceding claims, wherein the control module (113) is configured to select the bidirectional DC/DC converters (101) to be charged by the power source based on the status of the battery racks (102) connected to the bidirectional DC/DC converters (101), preferably, based on the battery charge level of the battery racks (102).

6. The portable charging device according to any one of the preceding claims, wherein each battery rack (102) comprises a plurality of battery units (104) and each battery unit (104) comprises a plurality of power cells.

7. The portable charging device according to claim 6, wherein the power cells are selected from a group comprising Lithium-ion (Li-ion) power cells, Lead-acid power cells, Nickel-Cadmium (Ni-Cd) power cells, Nickel-Metal Hydride (Ni-MH) power cells and any combination thereof.

8. The portable charging device according to any one of the preceding claims, wherein each battery rack (102) comprises a battery management system (106) configured to monitor the status of the battery rack (102) and to send the status of the battery rack to the control module.

9. The portable charging device according to any one of the preceding claims, wherein the at least one bidirectional DC/DC converter (101) is directly connected to the power source or is connected to the power source by interposition of an AC/DC converter.

10. The portable charging device according to any one of the preceding claims, wherein the power source is a DC power source, preferably a DC renewable power source, and more preferably a photovoltaic power plant.

11. The portable charging device according to any one of the preceding claims, wherein the at least one connector (107) comprises at least one of a CSS-Combo plug socket (108) and a CHAdeMO plug socket (109).

12. The portable charging device according to any one of the preceding claims, wherein the bidirectional DC/DC converters (101) are galvanically isolated to electrically isolate the energy storage system (103) from the power source and the electric vehicles.

13. The portable charging device according to any one of the preceding claims, wherein the control module (113) is communicatively couplable to a battery management system of the electric vehicle to determine the power charging requirements of the electric vehicle.

14. The portable charging device according to claim 13, wherein the control module (113) is configured to determine the charging power and the charging current being delivered to the electric vehicle based on the ambient temperature, a battery charge level of a battery of the electric vehicle, a capacity of the battery of the electric vehicle and the battery charge level of the battery racks.

15. A method for charging an electric vehicle, **characterized in that** the method comprises:
connecting the portable charging device (100) according to any one of claims 1 to 14 to a power source, preferably a DC power source, that is located in a first location;
at least partially charging the energy storage system (100) with DC power from the power source;
disconnecting the portable charging device (100) from the power source;
moving the portable charging device (100) to a second location;
determining, by the control module (113), the charging status of the battery racks (102) of the energy storage system (103);
detecting, by the control module (113), a connection of a particular electric vehicle to one of the connectors (107) of the portable charging device (100);
receiving, by the control module (113), power charging requirements of the electric vehicle from a battery management system of the electric vehicle;
selecting, by the control module (113), the bidirectional DC/DC converters (101) to feed the connector (107) to which the electric vehicle is connected based on the power charging requirements of the electric vehicle; and
regulating, by the control module (113), the power delivered by the selected bidirectional DC/DC converters (101) based on the power charging requirements of the particular electric vehicle.
